# EUROPEAN PATENT APPLICATION

(11) **EP 4 588 945 A1**
(43) Date of publication of application: **23.07.2025**
(21) Application number: 22964111.3
(22) Date of filing: 04.11.2022
(51) Int. Cl.: C08F 214/22, C08F 220/10, H01M 4/62, H01M 4/66

(54) **FLUOROPOLYMER, PRIMER SLURRY, SECONDARY BATTERY, AND ELECTRICAL APPARATUS**

(71) Applicant: Contemporary Amperex Technology (Hong Kong) Limited, Central (HK)
(72) Inventor: FENG, Wei, Ningde, Fujian 352100 (CN); LIU, Huihui, Ningde, Fujian 352100 (CN); OUYANG, Chuying, Ningde, Fujian 352100 (CN); SUN, Chengdong, Ningde, Fujian 352100 (CN); ZUO, Huanhuan, Ningde, Fujian 352100 (CN); ZHANG, Wenshuai, Ningde, Fujian 352100 (CN); ZHANG, Shuai, Ningde, Fujian 352100 (CN)
(74) Representative: Behr, Wolfgang
(86) International application number: PCT/CN2022/130103
(87) International publication number: WO 2024/092809

(57) **Abstract**

The present application provides a fluoropolymer, a primer slurry, a secondary battery and an electrical apparatus. The fluoropolymer comprises a structural unit derived from a monomer represented by formula I, and a structural unit derived from a monomer represented by formula II. A molar content of the structural unit derived from the monomer represented by the formula I is in a range from 70% to 90% on the basis of the total mole number of the structural units in the fluoropolymer, wherein R₁, R₂, and R₃ are each independently selected from one or more of hydrogen, fluorine, chlorine and fluorine substituted C₁₋₃ alkyl, R₄, R₅, and R₆ are each independently selected from one or more of hydrogen, and substituted or unsubstituted C₁₋₅ alkyl, and R₇ is selected from substituted or unsubstituted C₁₋₉ alkyl.

## Description

### TECHNICAL FIELD

The present application relates to the technical field of secondary batteries, in particular to a fluoropolymer, a primer slurry, a secondary battery and an electrical apparatus.

### BACKGROUND

In a preparation process of secondary battery electrode plates, a priming coating is coated between a current collector and an active material layer to provide electrical conductivity between the active material layer and the current collector, thereby reducing contact resistance between the active material layer and the current collector. The priming coat is usually prepared by coating a surface of the current collector with a primer slurry formulated with a binder, a conductive agent, and an adjuvant. However, the primer slurry in the prior art has a short process window and poor filterability, and is prone to precipitation and clogging of a pipeline, which seriously affects production efficiency of the electrode plates. Therefore, it is urgent to develop a polymer that can play a role of a binder while making the slurry have good dispersibility to improve processing performance of the slurry.

### SUMMARY OF THE INVENTION

The present application is made in view of the above topics, and its purpose is to provide a fluoropolymer and a coating containing the fluoropolymer to optimize a process window for coating preparation and improve production efficiency of a priming coating.

A first aspect of the present application provides a fluoropolymer, including a structural unit derived from a monomer represented by formula I, and a structural unit derived from a monomer represented by formula II, wherein a molar content of the structural unit derived from the monomer represented by the formula I is in a range from 70% to 90% on the basis of the total mole number of the structural units in the fluoropolymer, 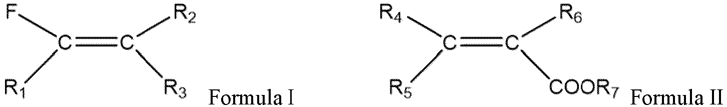 wherein, R₁, R₂, and R₃ are each independently selected from one or more of hydrogen, fluorine, chlorine atoms and fluorine substituted C₁₋₃ alkyl, R₄, R₅, and R₆ are each independently selected from one or more of hydrogen, and substituted or unsubstituted C₁₋₅ alkyl, and R₇ is selected from substituted or unsubstituted C₁₋₉ alkyl.

Compared with a polyvinylidene fluoride binder commonly used in the prior art, the fluoropolymer provided in the present application reduces viscosity of a slurry, improves filterability, and improves processability of the primer slurry, so that the primer slurry can meet production requirements of the primer slurry without adding a dispersant, which is beneficial to optimizing a production process of the primer slurry and improving its production quality.

In any of embodiments, R₁ is fluorine, R₂ and R₃ are each independently selected from one or more of hydrogen, fluorine, chlorine and trifluoromethyl, and R₅ and R₆ are each independently selected from one or both of hydrogen and methyl.

In any of embodiments, a molar content of the structural unit derived from the monomer represented by the formula II is in a range from 10% to 30% on the basis of the total mole number of the structural units in the fluoropolymer.

On the basis of the total mole number of the structural units in the fluoropolymer, when the molar content of the structural unit derived from the monomer represented by the formula II is in a range from 10% to 30%, viscosity of the fluoropolymer is appropriate, which can comprehensively improve manufacturability and adhesion of the slurry, and take into account the processing performance and use performance of the priming coating.

In any of embodiments, the fluoropolymer has a weight average molecular weight ranging from 400,000 to 500,000.

The fluoropolymer with the weight average molecular weight ranging from 400,000 to 500,000 has the appropriate viscosity, which can comprehensively improve the manufacturability and adhesion of the slurry, and take into account the processing performance and use performance of the priming coating.

In any of embodiments, the monomer represented by the formula I is selected from one or more of vinyl fluoride, vinylidene fluoride, tetrafluoroethylene, trifluorochloroethylene, and hexafluoropropylene.

In any of embodiments, the monomer represented by the formula II is selected from one or more methyl acrylate, ethyl acrylate, butyl acrylate, isoamyl acrylate, isooctyl acrylate, methyl methacrylate, ethyl methacrylate, hydroxyethyl acrylate, and hydroxypropyl acrylate.

A second aspect of the present application provides a preparation method for a fluoropolymer, including the following steps:
performing a polymerization reaction of at least one monomer represented by formula I with at least one monomer represented by formula II under a polymerizable condition, wherein a molar content of the monomer represented by the formula I is in a range from 70% to 90% on the basis of the total mole number of the monomer represented by the formula I and the monomer represented by the formula II, 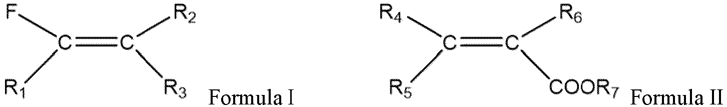
wherein, R₁, R₂, and R₃ are each independently selected from one or more of hydrogen, fluorine, chlorine and fluorine substituted C₁₋₃ alkyl, R₄, R₅, and R₆ are each independently selected from one or more of hydrogen, and substituted or unsubstituted C₁₋₅ alkyl, and R₇ is selected from substituted or unsubstituted C₁₋₉ alkyl.

Compared with a traditional binder, the fluoropolymer prepared by this method can improve stability and adhesion property of the primer slurry, significantly broaden a process window of the primer slurry, and improve the use performance of the primer slurry.

In any of embodiments, R₁ is fluorine, R₂ and R₃ are each independently selected from one or more of hydrogen, fluorine, chlorine and trifluoromethyl, and R₅ and R₆ are each independently selected from one or both of hydrogen and methyl.

In any of embodiments, a molar content of the monomer represented by the formula II is in a range from 10% to 30% on the basis of the total mole number of the monomer represented by the formula I and the monomer represented by the formula II.

On the basis of the total molar content of the structural units in the fluoropolymer, when the molar content of the structural unit derived from the monomer represented by the formula II is in a range from 10% to 30%, the viscosity of the fluoropolymer is appropriate, which can comprehensively improve the manufacturability and adhesion of the slurry, and take into account the processing performance and use performance of the priming coating.

In any of embodiments, the polymerization reaction includes first-stage polymerization and second-stage polymerization,
in the first-stage polymerization: an initiator, a first emulsifier, at least one monomer represented by the formula I and an aqueous medium are added into a reaction container to carry out the first-stage polymerization, and the monomer represented by the formula I is continuously fed into the first stage-polymerization; and
in the second-stage polymerization: an initiator, a second emulsifier, at least one monomer represented by the formula II and an aqueous medium are added into a reaction container after a period of reaction to carry out the second-stage polymerization, and the monomer represented by the formula I is continuously fed into the second-stage polymerization.

The method provided in the present application first continuously introduces the monomer represented by the formula I to form a fluorine-containing segment, thereby ensuring that the fluoropolymer has high adhesion property; and then introduces the monomer represented by the formula II to reduce contact between the fluorine-containing segment and an external environment, thereby effectively reducing the viscosity of the slurry. The fluoropolymer prepared by this method can more effectively improve the stability and adhesion property of the primer slurry than the fluoropolymer prepared by introducing all monomers into a reaction container while polymerizing, further broaden the process window and storage performance of the primer slurry, and help reduce a manufacturing cost of the priming coating.

In any of embodiments, mass of the monomer represented by the formula I introduced in the first-stage polymerization is 90% to 95% of total mass of the monomer represented by the formula I supplied in the polymerization reaction, and mass of the monomer represented by the formula I introduced in the second-stage polymerization is 5% to 10% of the total mass of the monomer represented by the formula I supplied in the polymerization reaction.

In any of embodiments, the initiator provided in the first-stage polymerization and the initiator provided in the second-stage polymerization are both persulfate, and a mass percentage of the initiator provided in the first-stage polymerization is in a range from 0.05% to 0.1% on the basis of total mass of the monomer represented by the formula I and the monomer represented by the formula II; and a mass percentage of the initiator provided in the second-stage polymerization is in a range from 0.05% to 0.1% on the basis of the mass of the monomer represented by the formula II.

In any of embodiments, a mass percentage of the first emulsifier is in a range from 0.2% to 0.7% on the basis of the total mass of the monomer represented by the formula I and the monomer represented by the formula II.

In any of embodiments, a mass percentage of the second emulsifier is in a range from 0.5% to 1.5% on the basis of the mass of the monomer represented by the formula II.

In any of embodiments, a mass percentage of the aqueous medium provided in the first-stage polymerization is in a range from 200% to 500%, and a mass percentage of the aqueous medium provided in the second-stage polymerization is in a range from 100% to 200% on the basis of the total mass of the monomer represented by the formula I and the monomer represented by the formula II.

In any of embodiments, for the first-stage polymerization, a reaction pressure is in a range from 5.5 MPa to 7.5 MPa, and a reaction temperature is in a range from 75°C to 85°C.

In any of embodiments, for the second-stage polymerization, a reaction pressure is in a range from 4.5 MPa to 6.5 MPa, and a reaction temperature is in a range from 86°C to 95°C.

In any of embodiments, providing the initiator, the second emulsifier, at least one monomer represented by the formula II and the aqueous medium into the reaction container after a period of reaction to carry out the second-stage polymerization includes:
adding, after adding the initiator into the reaction container, a premixed liquid containing the initiator, the second emulsifier, at least one monomer represented by the formula II and the aqueous medium.

In any of embodiments, the first emulsifier is an alkali metal salt of perfluorooctanoic acid.

In any of embodiments, the second emulsifier is one or both of polyoxyethylene-4-phenol ether ammonium sulfate and nonylphenol polyoxyethylene ether ammonium sulfate.

A third aspect of the present application provides use of the fluoropolymer in the first aspect in a secondary battery. Optionally, the secondary battery includes at least one of a lithium-ion battery, a sodium-ion battery, a magnesium-ion battery, and a potassium-ion battery.

A fourth aspect of the present application provides a primer slurry, including a binder, a conductive agent and a solvent, wherein the binder includes the fluoropolymer in the first aspect of the present application.

The primer slurry is easy to process and prepare and has good uniformity, which helps to improve battery production capacity.

In any of embodiments, a mass fraction of the binder is in a range from 0.5% to 5% on the basis of mass of the conductive agent.

In any of embodiments, a solid content of the primer slurry is in a range from 15% to 30%, and viscosity of the primer slurry is in a range from 100 mPa·s to 1,000 mPa·s.

The viscosity of the primer slurry with the solid content of 15% to 30% is in a range from 100 mPa·s to 1,000 mPa·s, which means that the primer slurry prepared from the fluoropolymer does not need to add an additional dispersant or thickener to improve processing performance, which helps to improve production efficiency and optimize a production process. At the same time, the primer slurry within this viscosity range has stability, fluidity and adhesion, which can not only improve adhesion stress of a priming coating, but also achieve uniform coating, which is beneficial to improving batch stability of the priming coating.

In any of embodiments, the solvent is an organic solvent.

In any of embodiments, the solvent is selected from one or more of N-methylpyrrolidone, N,N-dimethylpropionamide, N,N-diethylpropionamide, N,N-dipropylpropionamide, N,N-dibutylpropionamide, N,N-dimethylethylpropionamide, and 3-butoxy-N-methylpropionamide.

A fifth aspect of the present application provides a preparation method for a priming coating, including the following steps:
applying a primer slurry on a surface of a current collector by means of gravure coating, wherein the primer slurry is the primer slurry in the fourth aspect in the present application; and
drying to obtain the priming coating, wherein a thickness of the priming coating is in a range from 1 um to 3 um.

The priming coating with the thickness of 1 um to 3 um obtained by applying the primer slurry on the surface of the current collector by means of gravure coating and then drying has a lower membrane resistance, which can ensure electrical performance of an electrode plate and meanwhile, take into account the adhesion stress of the priming coating.

A sixth aspect of the present application provides a secondary battery, including a positive electrode plate, a negative electrode plate, a separator and an electrolyte, wherein the negative electrode plate includes the priming coating in the fifth aspect of the present application.

In any of embodiments, the secondary battery includes at least one of a lithium-ion battery, a sodium-ion battery, a magnesium-ion battery, and a potassium-ion battery.

A seventh aspect of the present application provides a battery module, including the secondary battery in the sixth aspect of the present application.

An eighth aspect of the present application provides a battery pack, including the secondary battery described in the sixth aspect of the present application or the battery module in the seventh aspect of the present application.

A ninth aspect of the present application provides an electrical apparatus, including at least one selected from the secondary battery in the sixth aspect of the present application, the battery module in the seventh aspect of the present application, or the battery pack in the eighth aspect of the present application.

### DESCRIPTION OF DRAWINGS

Fig. 1 is a schematic diagram of a gravure coating process according to an embodiment of the present application;
Fig. 2 is a schematic diagram of a secondary battery according to an embodiment of the present application;
Fig. 3 is an exploded view of a secondary battery according to an embodiment of the present application shown in Fig. 2;
Fig. 4 is a schematic diagram of a battery module according to an embodiment of the present application;
Fig. 5 is a schematic diagram of a battery pack according to an embodiment of the present application;
Fig. 6 is an exploded view of a battery pack according to an embodiment of the present application shown in Fig. 5; and
Fig. 7 is a schematic view of an electrical apparatus in which a secondary battery is used as a power source according to an embodiment of the present application.

### Description of reference numerals:

1 Battery pack; 2 Upper box; 3 Lower box; 4 Battery module; 5 Secondary battery; 51 Case; 52 Electrode assembly; 53 Cover plate; 6 Gravure coating apparatus; 61 Pressure roller; 62 Gravure roller; 63 Current collector; 64 Scraper; 65 Slurry tank.

### DETAILED DESCRIPTION

Hereinafter, embodiments of the binder, preparation method, electrode plate, battery, and electrical apparatus of the present application are described in detail and specifically disclosed with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2-3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

The conductivity of electrodes is one of the most important research topics in secondary batteries. In a preparation process of secondary battery electrode plates, a priming coating is coated between a current collector and an active material layer to provide electrical conductivity between the active material layer and the current collector, thereby reducing contact resistance between the active material layer and the current collector and improving performance of the batteries. In the prior art, binders and conductive agents are generally used to prepare the priming coating. Traditional polyvinylidene fluoride binders make the slurry have high viscosity and poor filterability, making it difficult to coat evenly. Therefore, a dispersant needs to be added in a slurry preparation process to improve processing performance of the slurry. This will undoubtedly complicate a production process of the slurry, affect production efficiency and lead to poor stability between batches of the slurry. Based on the above technical problems, the present application develops a polymer that can play a role of a binder and a dispersant in a primer slurry, improve filterability and stability of the primer slurry, and is beneficial to improving production efficiency and production quality of a priming coating.

Based on this, the present application provides a fluoropolymer, including a structural unit derived from a monomer represented by formula I, and a structural unit derived from a monomer represented by formula II, wherein a molar content of the structural unit derived from the monomer represented by the formula I is in a range from 70% to 90% on the basis of the total mole number of the structural units in the fluoropolymer, 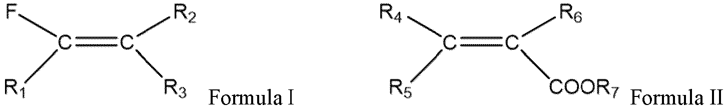 wherein, R₁, R₂, and R₃ are each independently selected from one or more of hydrogen, fluorine, chlorine and fluorine substituted C₁₋₃ alkyl, R₄, R₅, and R₆ are each independently selected from one or more of hydrogen, and substituted or unsubstituted C₁₋₅ alkyl, and R₇ is selected from substituted or unsubstituted C₁₋₉ alkyl.

As used herein, the term "fluoropolymer" refers to a polymer containing fluorine in the structural units.

As used herein, the term "polymer" includes, on the one hand, a collection of chemically homogeneous macromolecules prepared by a polymerization reaction, but differing in degree of polymerization, molar mass and a chain length. The term includes, on the other hand, derivatives of such macromolecular collection formed by the polymerization reaction, i.e. chemically homogeneous or chemically heterogeneous products obtainable by reaction the, for example addition or substitution, of functional groups in the above macromolecules.

As used herein, the term "C₁₋₅ alkyl" refers to a straight or branched hydrocarbon chain group consisting solely of carbon and hydrogen atoms, with no unsaturation present in the group, has one to five carbon atoms, and is attached to the rest of the molecules by a single bond. The term "C₁₋₃ alkyl", and the term "C₁₋₉ alkyl" should be interpreted accordingly. Examples of C₁₋₅ alkyl include, but are not limited to, methyl, ethyl, n-propyl, 1-methylethyl (isopropyl), butyl, and pentyl. In some embodiments, the fluorine-substituted C₁₋₃ alkyl is -CF₃, -CH₃CH₂F, or -CH₂FCH₂F. Examples of C₁₋₉ alkyl include, but are not limited to, methyl, ethyl, n-propyl, isopropyl, n-butyl, sec-butyl, tert-butyl, n-pentyl, n-hexyl, n-heptyl, n-octyl, and n-nonyl.

As used herein, the term "substituted" means that at least one hydrogen atom of the compound or chemical moiety is replaced by another chemical moiety with a substituent, wherein the substituent is each independently selected from: hydroxyl, thiol, amino, cyano, nitro, aldehyde, halogen atoms, alkenyl, alkynyl, aryl, heteroaryl, C₁₋₆ alkyl, and C₁₋₆ alkoxy.

As used herein, the term "process window" refers to a process range that can ensure product quality, including but not limited to a temperature range, a pressure range, a storage time length, etc. It can be understood that the wider the process window, the lower the demand for process accuracy.

In some embodiments, R₁ is fluorine, R₂ and R₃ are each independently selected from one or more of hydrogen, fluorine, chlorine atoms and trifluoromethyl, and R₅ and R₆ are each independently selected from one or both of hydrogen and methyl.

In some embodiments, the monomer represented by the formula I is selected from one or more of vinyl fluoride, vinylidene fluoride, tetrafluoroethylene, trifluoro chloroethylene, and hexafluoropropylene.

In some embodiments, the monomer represented by the formula II is selected from one or more methyl acrylate, ethyl acrylate, butyl acrylate, isoamyl acrylate, isooctyl acrylate, methyl methacrylate, ethyl methacrylate, hydroxyethyl acrylate, and hydroxypropyl acrylate.

In some embodiments, the polymer includes one or more structural units derived from the monomer represented by the formula I. In some embodiments, the polymer includes one or more structural units derived from the monomer represented by the formula II. In some embodiments, the polymer includes, but is not limited to a vinylidene fluoride-methyl acrylate copolymer, a vinylidene fluoride-ethyl acrylate copolymer, a vinylidene fluoride-butyl acrylate copolymer, a vinylidene fluoride-isoamyl acrylate copolymer, a vinylidene fluoride-isooctyl acrylate copolymer, a vinylidene fluoride-methyl methacrylate copolymer, a vinylidene fluoride-ethyl methacrylate copolymer, a vinylidene fluoride-hydroxyethyl acrylate copolymer, a vinylidene fluoride-hydroxypropyl acrylate copolymer, a vinylidene fluoride-tetrafluoroethylene-butyl acrylate copolymer, a vinylidene fluoride-tetrafluoropropylene-methyl acrylate copolymer, a vinylidene fluoride-vinyl fluoride-butyl acrylate copolymer, a vinylidene fluoride-trifluorochloroethylene-butyl acrylate copolymer, a vinylidene fluoride-hexafluoropropylene-butyl acrylate copolymer, a vinylidene fluoride-hexafluoropropylene-methyl acrylate copolymer, and a vinylidene fluoride-hexafluoropropylene-isooctyl acrylate copolymer.

In some embodiments, a molar content of the structural unit derived from the monomer represented by the formula I can be selected from 70%, 75%, 80%, 85%, or 90% on the basis of the total mole number of the structural units in the fluoropolymer.

The fluorine in the structural unit derived from the monomer represented by the formula I can form hydrogen-bond interaction with hydroxyl and/or carboxyl on a surface of a current collector, so that a priming coating has good adhesion stress and is not prone to falling off in a manufacturing and use process, causing safety accidents. The structural unit derived from the monomer represented by the formula II can effectively decrease a fluorine content of the fluoropolymer, so that a mass content of the structural unit derived from the monomer represented by the formula I is in a range from 70% to 90%, which helps to adjust viscosity of a slurry, improve a phenomenon of excessive viscosity of a primer slurry caused by the fluorine, and improve manufacturability of the slurry.

Compared with a polyvinylidene fluoride binder commonly used in the prior art, the fluoropolymer provided in the present application reduces viscosity of a slurry, improves filterability, and improves processability of the primer slurry, so that the primer slurry can meet production requirements of the primer slurry without adding a dispersant, which is beneficial to optimizing a production process of the primer slurry and improving its production quality.

In some embodiments, a molar content of the structural unit derived from the monomer represented by the formula II is in a range from 10% to 30% on the basis of the total mole number of the structural units in the fluoropolymer. In some embodiments, a molar content of the structural unit derived from the monomer represented by the formula II is optionally any one of 12%, 15%, 18%, 20%, 22%, 25% or 30% on the basis of the total mole number of the structural units in the fluoropolymer.

On the basis of the total molar content of the structural units in the fluoropolymer, when the molar content of the structural unit derived from the monomer represented by the formula II is in a range from 10% to 30%, the viscosity of the fluoropolymer is appropriate, which makes an electrode plate have good adhesion stress. At the same time, the appropriate viscosity makes the slurry have good flowability and filterability, which can comprehensively improve the manufacturability and adhesion of the slurry, and take into account the processing performance and use performance of the priming coating.

In some embodiments, the fluoropolymer has a weight average molecular weight ranging from 400,000 to 500,000. In some embodiments, the weight average molecular weight of the fluoropolymer is optionally any one of 430,000, 450,000 and 480,000.

As used herein, the term "weight average molecular weight" refers to a sum of products of weight fractions of molecules with different molecular weights in the polymer and their corresponding molecular weights.

In the present application, the test of weight average molecular weight of the polymer can be tested using methods known in the art, such as gel chromatography, such as using Waters 2695 Isocratic HPLC gel chromatograph (differential refractive index detector 2141). In some embodiments, a test method is to use a polystyrene solution sample with a mass fraction of 3.0% as the reference, and select a matching chromatographic column (oily: Styragel HT5DMF7.8*300 mm+Styragel HT4). A 3.0% fluoropolymer glue solution is prepared using a purified N-methylpyrrolidone (NMP) solvent, and the prepared solution is allowed to stand for one day for later use. When testing, tetrahydrofuran is drawn in with a syringe first for rinsing, which is repeated several times. Then 5 ml of the test solution is drawn in, the air in the syringe is removed, and the needle tip is wiped dry. Finally, the sample solution is slowly injected into the injection port. After the display is stable, the data is obtained and the weight average molecular weight is read.

The fluoropolymer with the weight average molecular weight ranging from 400,000 to 500,000 has the appropriate viscosity, which makes an electrode plate have good adhesion stress. At the same time, the appropriate viscosity is beneficial for subsequent coating work, which can comprehensively improve the manufacturability and adhesion of the slurry, and take into account the processing performance and use performance of the priming coating.

In an embodiment of the present application, a preparation method for a fluoropolymer is provided, including the following steps:
performing a polymerization reaction of at least one monomer represented by formula I with at least one monomer represented by formula II under a polymerizable condition, wherein a molar content of the monomer represented by the formula I is in a range from 70% to 90% on the basis of the total mole number of the monomer represented by the formula I and the monomer represented by the formula II, 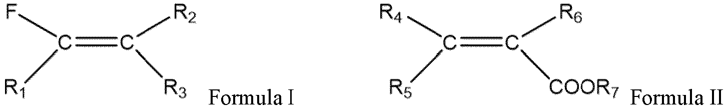
wherein, R₁, R₂, and R₃ are each independently selected from one or more of hydrogen, fluorine, chlorine and fluorine substituted C₁₋₃ alkyl, R₄, R₅, and R₆ are each independently selected from one or more of hydrogen, and substituted or unsubstituted C₁₋₅ alkyl, and R₇ is selected from substituted or unsubstituted C₁₋₉ alkyl.

As used herein, the term "polymerizable condition" refers to those conditions including a temperature, a pressure, a reactant concentration, an optional solvent/diluent, reactant mixing/addition parameters selected by those skilled in the art, and other conditions that facilitate a reaction of one or more monomers within at least one polymerization reactor.

Compared with a traditional binder, the fluoropolymer prepared by this method can improve stability and adhesion property of the primer slurry, significantly broaden a process window of the primer slurry, and improve the use performance of the primer slurry.

In some embodiments, R₁ is fluorine, R₂ and R₃ are each independently selected from one or more of hydrogen, fluorine, chlorine and trifluoromethyl, and R₅ and R₆ are each independently selected from one or both of hydrogen and methyl.

In some embodiments, a molar content of the monomer represented by the formula II is in a range from 10% to 30% on the basis of the total mole number of the monomer represented by the formula I and the monomer represented by the formula II. In some embodiments, a molar content of the structural unit derived from the monomer represented by the formula II is optionally any one of 12%, 15%, 18%, 20%, 22%, 25% or 30% on the basis of the total mole number of the monomer represented by the formula I and the monomer represented by the formula II.

On the basis of the total molar content of the structural units in the fluoropolymer, when the molar content of the structural unit derived from the monomer represented by the formula II is in a range from 10% to 30%, the viscosity of the fluoropolymer is appropriate, which can comprehensively improve the manufacturability and adhesion of the slurry, and take into account the processing performance and use performance of the priming coating.

In some embodiments, the polymerization reaction includes first-stage polymerization and second-stage polymerization,
in the first-stage polymerization: an initiator, a first emulsifier, at least one monomer represented by the formula I and an aqueous medium are added into a reaction container to carry out the first-stage polymerization, and the monomer represented by the formula I is continuously fed into the first stage-polymerization; and
in the second-stage polymerization: an initiator, a second emulsifier, at least one monomer represented by the formula II and an aqueous medium are added into a reaction container after a period of reaction to carry out the second-stage polymerization, and the monomer represented by the formula I is continuously fed into the second-stage polymerization.

As used herein, the term "continuous feed" refers to the slow, small, incremental addition of the monomers.

The method provided in the present application first continuously introduces the monomer represented by the formula I to form a fluorine-containing segment, thereby ensuring that the fluoropolymer has high adhesion property; and then introduces the monomer represented by the formula II to reduce contact between the fluorine-containing segment and an external environment, thereby effectively reducing the viscosity of the slurry. The fluoropolymer prepared by this method can more effectively improve the stability and adhesion property of the primer slurry than the fluoropolymer prepared by introducing all monomers into a reaction container while polymerizing, further broaden the process window and storage performance of the primer slurry, and help reduce a manufacturing cost of the priming coating.

In some embodiments, the initiator provided in the first-stage polymerization and the initiator provided in the second-stage polymerization are both persulfate, and a mass percentage of the initiator provided in the first-stage polymerization is in a range from 0.05% to 0.1% on the basis of total mass of the monomer represented by the formula I and the monomer represented by the formula II; and a mass percentage of the initiator provided in the second-stage polymerization is in a range from 0.05% to 0.1% on the basis of the mass of the monomer represented by the formula II.

In some embodiments, the initiator persulfate may be potassium persulfate, and potassium persulfate effectively decomposes at above 60°C to generate free radical ions or ionic free radicals, and is suitable as an initiator for emulsion polymerization.

In some embodiments, a mass percentage of the initiator provided in the first-stage polymerization is 0.05%, 0.07%, 0.09% or 0.1% on the basis of the total mass of the monomer represented by the formula I and the monomer represented by the formula II.

In some embodiments, a mass percentage of the initiator provided in the second-stage polymerization is 0.05%, 0.07%, 0.09% or 0.1% on the basis of the mass of the monomer represented by the formula II.

In some embodiments, a mass percentage of the first emulsifier is in a range from 0.2% to 0.7% on the basis of the total mass of the monomer represented by the formula I and the monomer represented by the formula II. In some embodiments, the mass percentage of the first emulsifier is 0.2%, 0.5% or 0.7% on the basis of the total mass of the monomer represented by the formula I and the monomer represented by the formula II.

In some embodiments, the first emulsifier is an alkali metal salt of perfluorooctanoic acid.

In some embodiments, a mass percentage of the second emulsifier is in a range from 0.5% to 1.5% on the basis of the mass of the monomer represented by the formula II. In some embodiments, the mass percentage of the second emulsifier is 0.5%, 0.75%, 1.0%, 1.25% or 1.5% on the basis of the mass of the monomer represented by the formula II.

In some embodiments, the second emulsifier is one or both of polyoxyethylene-4-phenol ether ammonium sulfate and nonylphenol polyoxyethylene ether ammonium sulfate.

In some embodiments, a mass percentage of the aqueous medium provided in the first-stage polymerization is in a range from 200% to 500%, and a mass percentage of the aqueous medium provided in the second-stage polymerization is in a range from 100% to 200% on the basis of the total mass of the monomer represented by the formula I and the monomer represented by the formula II. In some embodiments, the mass percentage of the aqueous medium provided in the first-stage polymerization is 200%, 300%, 400% or 500%, and the mass percentage of the aqueous medium provided in the second-stage polymerization is 100%, 150% or 200% on the basis of the total mass of the monomer represented by the formula I and the monomer represented by the formula II. In some embodiments, the aqueous medium is an aqueous solvent, and is optionally deionized water or a mixture of deionized water and other hydrophilic solvents, such as alcohol or ethyl acetate.

In some embodiments, for the first-stage polymerization, a reaction pressure is in a range from 5.5 MPa to 7.5 MPa, and a reaction temperature is in a range from 75°C to 85°C. In some embodiments, for the first-stage polymerization, the reaction pressure is 5.5 MPa, 6.5 MPa or 7.5 MPa, and the reaction temperature is 75°C, 80°C or 85°C.

In some embodiments, for the second-stage polymerization, a reaction pressure is in a range from 4.5 MPa to 6.5 MPa, and a reaction temperature is in a range from 86°C to 95°C. In some embodiments, for the second-stage polymerization, the reaction pressure is 4.5 MPa, 5.5 MPa or 6.5 MPa, and the reaction temperature is 86°C, 90°C or 95°C.

In some embodiments, mass of the monomer represented by the formula I introduced in the first-stage polymerization is 90% to 95% of total mass of the monomer represented by the formula I supplied in the polymerization reaction, and mass of the monomer represented by the formula I introduced in the second-stage polymerization is 5% to 10% of the total mass of the monomer represented by the formula I supplied in the polymerization reaction. In some embodiments, the mass of the monomer represented by the formula I introduced in the first-stage polymerization is 90%, 92% or 95% of total mass of the monomer represented by the formula I supplied in the polymerization reaction, and the mass of the monomer represented by the formula I introduced in the second-stage polymerization is 5%, 7% or 10% of the total mass of the monomer represented by the formula I supplied in the polymerization reaction.

In some embodiments, providing the initiator, the second emulsifier, at least one monomer represented by the formula II and the aqueous medium into the reaction container after a period of reaction to carry out the second-stage polymerization includes:
adding, after adding the initiator into the reaction container, a premixed liquid containing the initiator, the second emulsifier, at least one monomer represented by the formula II and the aqueous medium.

In an embodiment of the present application, use of the fluoropolymer in any of embodiments in a secondary battery is provided. Optionally, the secondary battery includes at least one of a lithium-ion battery, a sodium-ion battery, a magnesium-ion battery, and a potassium-ion battery. In some embodiments, the fluoropolymer is used as a binder in the secondary battery. In some embodiments, the fluoropolymer is used as a binder of a priming coating in the secondary battery.

### [Primer slurry]

In an embodiment of the present application, a primer slurry is provided, including a binder, a conductive agent and a solvent, wherein the binder includes the fluoropolymer in any of embodiments.

As used herein, the term "binder" refers to a chemical compound, polymer or mixture that forms a colloidal solution or colloidal dispersion in a dispersion medium.

In the present application, the term "conductive agent" refers to a substance that functions to collect microcurrents, and includes but not limited to at least one of superconducting carbon, acetylene black, carbon black, ketjen black, carbon dots, carbon nanotubes, graphene, and carbon nanofibers.

In some embodiments, the solvent is an organic solvent.

The organic solvent refers to an organic compound containing carbon atoms as a solvent. The organic solvent can dissolve some substances that are insoluble in water. The use of the organic solvent as a solvent of a priming coating makes a primer slurry suitable for preparing the priming coating of a negative electrode plate. The priming coating is not prone to dissolution in a preparation process of a negative electrode film layer and has high stability.

In some embodiments, the solvent is selected from one or more of N-methylpyrrolidone, N,N-dimethylpropionamide, N,N-diethylpropionamide, N,N-dipropylpropionamide, N,N-dibutylpropionamide, N,N-dimethylethylpropionamide, and 3-butoxy-N-methylpropionamide.

The primer slurry is easy to process and prepare and has good uniformity, which helps to improve battery production capacity.

In some embodiments, a mass fraction of the binder is in a range from 0.5% to 5% on the basis of mass of the conductive agent. In some embodiments, a mass content of the binder is optionally any one of 0.5%, 1.0%, 2.0%, 4.0% and 5.0% on the basis of mass of the conductive agent.

When the mass content of the binder is within an appropriate range, sufficient adhesion stress is ensured between the priming coating and a current collector to avoid a risk of falling off of the priming coating during the use of a battery cell; at the same time, when the mass content of the binder is within an appropriate range, the primer slurry has appropriate viscosity, and the slurry has good fluidity and filterability, which is beneficial to subsequent coating work.

In some embodiments, a solid content of the primer slurry is in a range from 15% to 30%, and viscosity of the primer slurry is in a range from 100 mPa·s to 1,000 mPa·s. In some embodiments, when the solid content of the primer slurry is in a range from 15% to 30%, the viscosity of the primer slurry is in 100 mPa·s, 200 mPa·s, 300 mPa·s, 400 mPa·s, 500 mPa·s, 600 mPa·s, 700 mPa·s, 800 mPa·s, 900 mPa·s or 1,000 mPa·s.

The viscosity of the primer slurry is within an appropriate range, which is beneficial to the subsequent coating and drying work on the one hand; on the other hand, the appropriate viscosity can improve the stability of the slurry, making the slurry have good fluidity and filterability.

In the present application, the viscosity of the primer slurry of the fluoropolymer can be tested using methods known in the art, such as using a rotational viscometer for testing.

The viscosity of the primer slurry with the solid content of 15% to 30% is in a range from 100 mPa·s to 1,000 mPa·s, which means that the primer slurry prepared from the fluoropolymer does not need to add an additional dispersant or thickener to improve processing performance, which helps to improve production efficiency and optimize a production process. At the same time, the primer slurry within this viscosity range has stability, fluidity and adhesion, which can not only improve adhesion stress of a priming coating, but also achieve uniform coating, which is beneficial to improving batch stability of the priming coating.

In an embodiment of the present application, a preparation method for a priming coating is provided, including the following steps:
applying a primer slurry on a surface of a current collector by means of gravure coating, wherein the primer slurry is the primer slurry in any of embodiments; and drying the primer slurry to obtain the priming coating.

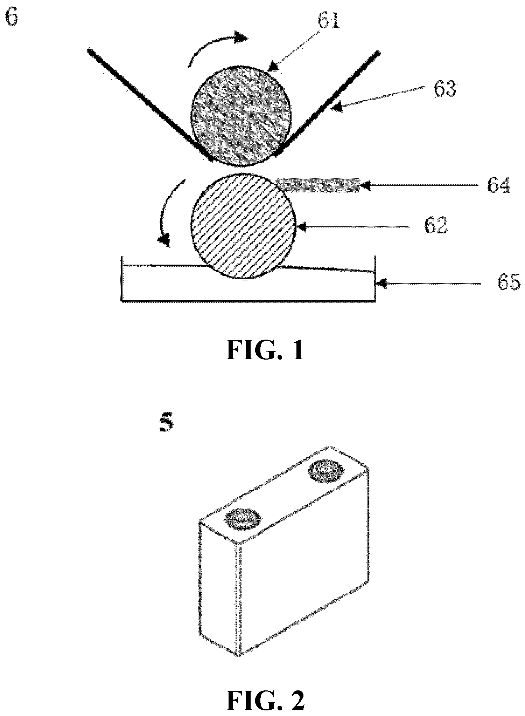

In some embodiments, a gravure coating process is shown in Fig. 1, where a gravure roller 62 in a gravure coating apparatus 6 is partially immersed in a slurry in a slurry tank 65, the gravure roller 62 rotates to drive the slurry to move, a scraper 64 scrapes off the slurry on a smooth part of the gravure roller 62, and the slurry remaining in pits on a surface of the gravure roller 62 is transferred to a surface of a current collector 63 under a pressure of a pressure roller 61, wherein a rotation direction of the gravure roller 62 is opposite to a movement direction of the pressure roller 61. A depth of the pits on the surface of the gravure roller 62 can be adjusted according to a required thickness of the priming coating, and the depth of the pits is optionally in a range from 10 um to 100 um.

A surface of the priming coating prepared by gravure coating is rough, and the adhesion property between the priming coating and the film layer or the current collector can be improved by mechanical riveting, so that an electrode plate has better adhesion stress.

In some embodiments, the thickness of the priming coating is in a range from 1 um to 3 um.

The priming coating with the thickness of 1 um to 3 um obtained by applying the primer slurry on the surface of the current collector by means of gravure coating and then drying has the excellent adhesion stress and a low membrane resistance, which can ensure mechanical performance and electrical performance of the electrode plate.

In an embodiment of the present application, a secondary battery is provided, including a positive electrode plate, a negative electrode plate, a separator and an electrolyte, wherein the negative electrode plate includes the priming coating described in any of embodiments. In some embodiments, the secondary battery includes at least one of a lithium-ion battery, a sodium-ion battery, a magnesium-ion battery, and a potassium-ion battery.

During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### [Positive electrode plate]

The positive electrode plate includes a positive electrode current collector and a positive electrode film layer arranged on at least one surface of the positive electrode current collector.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may include, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

### [Negative electrode plate]

The negative electrode plate includes a negative electrode current collector, a priming coating arranged on at least one surface of the negative electrode current collector, and a negative electrode film layer arranged on the priming coating, and the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate can be prepared by the following manners: dispersing the above components for preparing the priming coating, such as the fluoropolymer and the conductive agent, in N-methyl-2-pyrrolidone to form the primer slurry; applying the primer slurry on a surface of the copper foil current collector by means of gravure coating to obtain a current collector with the priming coating; dispersing the above components for preparing the negative electrode film layer, such as the negative electrode active material, the conductive agent, the binder and any other components, in a solvent (such as deionized water) to form a negative electrode slurry; and coating the negative electrode slurry on the current collector having the priming coating, followed by drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, nonwoven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft bag may be a plastic, and examples of the plastic may include polypropylene, polybutylene terephthalate, polybutylene succinate, and the like.

A shape of the secondary battery is not particularly limited in the present application, and the secondary battery may be a cylinder, a square, or any other shape. For example, Fig. 2 shows an example of a secondary battery 5 having a square structure.

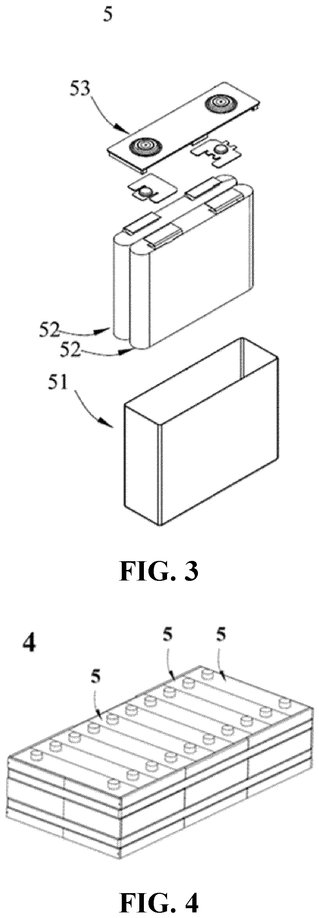

In some embodiments, referring to Fig. 3, the outer package may include a case 51 and a cover plate 53. The case 51 may include a bottom plate and a side plate connected to the bottom plate, and the bottom plate and the side plate enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary battery may be assembled into a battery module, the number of the secondary batteries included in the battery module may be one or more, and the specific number may be selected by those skilled in the art according to the application and capacity of the battery module.

Fig. 4 is a battery module 4 as an example. Referring to Fig. 4, in the battery module 4, a plurality of secondary batteries 5 can be sequentially arranged in a length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery module may be assembled into a battery pack, the number of the battery modules included in the battery pack may be one or more, and the specific number may be selected by those skilled in the art according to the application and capacity of the battery pack.

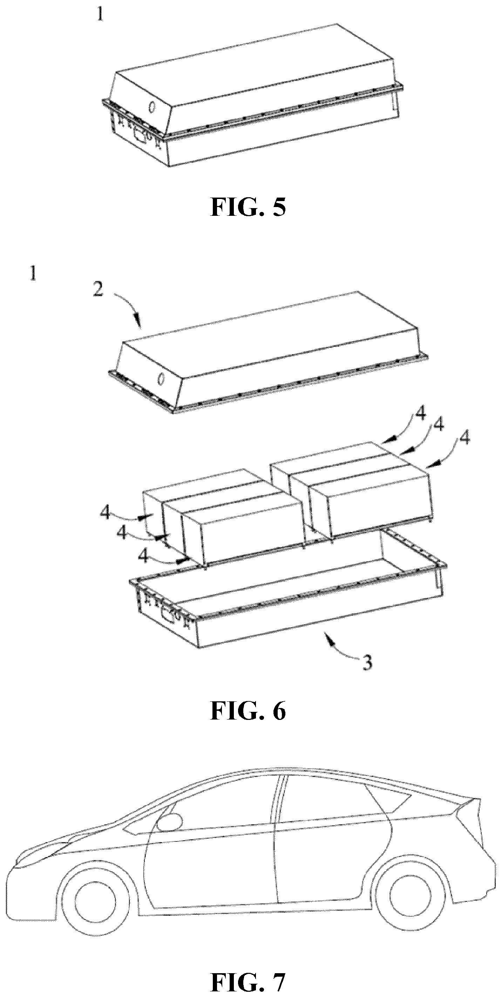

Fig. 5 and Fig. 6 are a battery pack 1 as an example. Referring to Fig. 5 and Fig. 6, the battery pack 1 may include a battery box and a plurality of battery modules 4 arranged in the battery box. The battery box includes an upper box 2 and a lower box 3, where the upper box 2 can cover the lower box 3 and form an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack can be selected according to the requirements during use.

Fig. 7 is an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### EXAMPLES

Embodiments of the present application will be described below. The embodiments described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Example 1

### 1) Preparation of fluoropolymer

26 kg of deionized water, 37.3 g of perfluorooctanoic acid sodium salt, and 112 g of potassium persulfate solution with a concentration of 5% are sequentially added into a reactor, wherein conductivity of the deionized water is less than or equal to 2 µs/cm, and the reactor is closed;
the reactor is evacuated and filled with nitrogen, and an operation is repeated until an oxygen concentration in the reactor is less than 100 ppm;
a vinylidene fluoride monomer is introduced into the reactor, a pressure in the reactor is 7.5 MPa, when a temperature in the reactor is raised to 85°C, a reaction begins, and the vinylidene fluoride monomer is continuously introduced during the reaction to maintain a reaction pressure in the reactor unchanged;
11.2 kg of deionized water, 29.8 g of polyoxyethylene-4-phenol ether ammonium sulfate, and 23.3 mol of butyl acrylate are added into a stirring tank and stirred evenly to obtain a premixed solution, wherein the conductivity of the deionized water is less than or equal to 2 µs/cm;
when the total amount of the vinylidene fluoride monomer introduced is 66.5 mol, 44.8 g of ammonium persulfate with a concentration of 5% is added, the reaction pressure is adjusted to 6.0 MPa, the temperature is raised to 90°C, the premixed liquid is slowly added to the reactor, the total addition time of the premixed solution is 2.5 hours, and at the same time, the remaining 3.5 mol of vinylidene fluoride monomer is gradually introduced;
when the pressure in the reactor drops to 0.2 MPa, the reaction is stopped; and
a reaction product is cooled to a room temperature, and then condensed, washed, separated, dried and crushed to obtain a vinylidene fluoride-butyl acrylate copolymer binder.

### 2) Preparation of primer slurry

5.88 kg of conductive carbon black and 0.12 kg of vinylidene fluoride-butyl acrylate copolymer binder are weighed and sequentially added into the stirring tank, a stirring velocity is set to be 300 rpm, and stirring is performed for 10 minutes;
14 kg of N-methylpyrrolidone is weighed and added into the stirring tank, a stirring velocity is set to be 1200 rpm, and stirring is performed for 120 minutes;
10 kg of N-methylpyrrolidone is weighed again and added into the stirring tank, a stirring velocity is set to be 1500 rpm, and stirring is performed for 120 minutes; and
the slurry above is filtered through a 200-mesh filter to obtain the primer slurry.

### 3) Preparation of priming coating

A primer slurry is coated using a gravure coating apparatus shown in Fig. 1. The primer slurry is first injected into a slurry tank, and the primer slurry is carried by rotation of a gravure roller. After the primer slurry on a smooth part is scraped off by a scraper, the remaining primer slurry remains only in pits on a surface of the gravure roller, and a depth of the pits is 50 um. Under a pressure of a pressure roller, the primer slurry in the pits can be transferred to a surface of a copper foil current collector substrate, and dried to obtain the priming coating with a thickness of 2 um.

### 4) Preparation of negative electrode plate

A graphite material, conductive agent carbon black, a butylbenzene binder, sodium carboxymethyl cellulose, and N-methylpyrrolidone (NMP) are stirred and mixed uniformly in a weight ratio of 97.15:0.04:1.95:0.5:0.36 to obtain a negative electrode slurry with a solid content of 64%; and
the negative electrode slurry is uniformly coated on a priming coating, and then dried, cold pressed, and cut to obtain the negative electrode plate.

In Examples 2-3, a ratio of each monomer in the fluoropolymer is adjusted, and other parameters are kept consistent with those in Example 1. The specific parameters are shown in Table 1 and Table 2.

In Examples 4-7, reaction conditions in synthesis of the fluoropolymer are adjusted, so that the fluoropolymer has different weight average molecular weights. Other parameters are kept consistent with those in Example 1. The specific parameters are shown in Table 1 and Table 2. Specifically, the preparation method for the fluoropolymer with a weight average molecular weight of 300,000 in Example 4 is basically the same as the steps in Example 1, except that the addition amount of the potassium persulfate solution with the concentration of 5% is adjusted to be 99.00 g.

The preparation method for the fluoropolymer with a weight average molecular weight of 400,000 in Example 5 is basically the same as the steps in Example 1, except that the addition amount of the potassium persulfate solution with the concentration of 5% is adjusted to be 99.45 g.

The preparation method for the fluoropolymer with a weight average molecular weight of 500,000 in Example 6 is basically the same as the steps in Example 1, except that the reaction temperature is adjusted to be 80°C, and the addition amount of the potassium persulfate solution with the concentration of 5% is adjusted to be 89.45 g.

The preparation method for the fluoropolymer with a weight average molecular weight of 600,000 in Example 7 is basically the same as the steps in Example 1, except that the reaction temperature is adjusted to be 80°C, and the addition amount of the potassium persulfate solution with the concentration of 5% is adjusted to be 81.00 g.

In Examples 8-11, the mass fraction of the binder in the primer slurry is adjusted, and other parameters are kept consistent with those in Example 1. The specific parameters are shown in Table 1 and Table 2.

In Examples 12-15, the solid content of the primer slurry is adjusted, and other parameters are kept consistent with those in Example 1. The specific parameters are shown in Table 1 and Table 2.

In Example 16, the ethyl acrylate monomer is replaced by the isooctyl acrylate monomer, and other parameters are the same as those in Example 1. The specific parameters are shown in Table 1 and Table 2.

In Example 17, the priming coating is prepared by using a scraper coating method. Other methods are the same as those in Example 1. The specific parameters are shown in Table 1 and Table 2.

In Example 18, the preparation method is consistent with that in Example 1, except that the binder in the priming coating is a vinylidene fluoride-butyl acrylate copolymer prepared by a traditional method, and the synthesis method thereof is:
37.2 kg of deionized water (conductivity less than or equal to 2 µs/cm), 37.3 g of perfluorooctanoic acid sodium salt, 112 g of potassium persulfate solution with a concentration of 5%, 44.8 g of ammonium persulfate solution with a concentration of 5%, and 29.8 g of polyoxyethylene-4-phenol ether ammonium sulfate are sequentially added into a reactor, and the reactor is closed;
the reactor is evacuated and filled with nitrogen, and an operation is repeated until an oxygen concentration in the reactor is less than 100 ppm;
a vinylidene fluoride monomer and 23.3 mol of butyl acrylate are introduced into the reactor until the pressure inside the reactor reaches 7.5 MPa;
when a temperature in the reactor is raised to 85°C, a reaction begins, the vinylidene fluoride monomer is continuously introduced during the reaction to maintain a reaction pressure in the reactor unchanged, and the mole number of the vinylidene fluoride monomer introduced is 70 mol;
when the pressure in the reactor drops to 0.2 MPa, the reaction is stopped; and
a reaction product is cooled to a room temperature, and then condensed, washed, separated, dried and crushed to obtain a fluoropolymer, namely a vinylidene fluoride-butyl acrylate copolymer.

In Comparative Example 1, the preparation method is consistent with that in Example 1, except that in Comparative Example 1, a vinylidene fluoride polymer is used as the binder of the primer slurry, which is HSV900 model of Arkema, France.

Comparative Example 2 is basically the same as Comparative Example 1, except that the preparation method for the priming coating is adjusted. The specific preparation method is:
a primer slurry is coated on a surface of a copper foil current collector substrate by using a scraper, and dried to obtain the priming coating with a thickness of 2 µm.

In Example 3 to Example 4, a ratio of each monomer in the fluoropolymer is adjusted, and other parameters are kept consistent with those in Example 1. The specific parameters are shown in Table 1 and Table 2.

The relevant parameters of the primer slurry and the coating of the above Examples 1-18 and Comparative Examples 1-4 are shown in Table 1 and Table 2 below.

In addition, the primer slurry and the coating obtained in the above Examples 1-18 and Comparative Examples 1-4 are subjected to performance testing.

### II. Test method:

### 1. Weight average molecular weight test

A Waters 2695 Isocratic HPLC gel permeation chromatography (differential refraction detector 2141) is used. A polystyrene solution sample with a mass fraction of 3.0% is used as the reference, and a matching chromatographic column (oily: Styragel HT5DMF7.8× 300mm+Styragel HT4) is selected. A 3.0% fluoropolymer solution is prepared using a purified N-methylpyrrolidone (NMP) solvent, and the prepared solution is allowed to stand for one day for later use. When testing, tetrahydrofuran is drawn in with a syringe first for rinsing, which is repeated several times. Then 5 ml of the test solution is drawn in, the air in the syringe is removed, and the needle tip is wiped dry. Finally, the sample solution is slowly injected into the injection port. After the display is stable, the data is obtained and the weight average molecular weight is read.

### 2. Viscosity test of primer slurry

The viscosity of the primer slurry is measured using a rotational viscometer. A suitable rotor is selected, a viscometer rotor is fixed, and the primer slurry is placed under the viscometer rotor, so that the slurry just submerges a scale line of the rotor, wherein the instrument model: Shanghai Fangrui NDJ-5S, the rotor is 62#, the rotational velocity is 30 rpm, and the viscosity range of the slurry can be measured from 0 mPa·s to 1,000 mPa·s; the rotor is 63#, the rotational velocity is 30 rpm, the viscosity range of the slurry can be measured from 0 mPa·s to 2,000 mPa·s, the test temperature is 25°C, the test time is 5 min, and the data is read after the display is stable.

### 3. Filtration performance test of primer slurry

A 500ml beaker is taken and placed at a lower end of a 200-mesh filter screen bracket, 500ml of primer slurry is taken and placed in a filter screen for filtration. When the slurry volume in the beaker reaches 300 ml and the filtration time is less than 120 s, it indicates that filtration performance of the slurry is good, and it is judged as "Y"; and if the slurry cannot pass through the filter screen within 120 s, it indicates that the filtration performance of the slurry is poor, and it is judged as "N".

### 4. Solid content of primer slurry and difference value of solid content after standing for 24 hours

A copper foil is taken and weighed in the weight loss rate meter, which is recorded as M0, and the weight loss rate meter is reset;
a small amount of the primer slurry is taken and coated on the copper foil, and then the cooper foil is put into the weight loss rate meter and weighed, which is recorded as M1;
the equipment is closed and drying is started;
after completion, weighing data is recorded as M2, and the solid content is calculated, and is (M2-M0)/(M1-M0); and
the solid content of the upper and lower layers of primer slurry after standing for 24 hours is measured in the same way, and the difference value in the solid content of the primer slurry after standing for 24 hours is calculated by subtracting the solid content of the upper layer of primer slurry from the solid content of the lower layer of primer slurry.

### 5. Adhesion stress of electrode plate

Referring to the GB-T2790-1995 national standard "Adhesive-180° Peel Strength Test Method", the test process of adhesion stress in the examples and comparative examples of the present application is as follows: a sample with a width of 30 mm and a length of 150 mm is cut out by a blade, a special double-sided adhesive tape is pasted on a steel plate, and the adhesive tape has a width of 20 mm and a length of 100 mm. A negative electrode film layer surface of the electrode plate sample cut out earlier is pasted on a double-sided adhesive tape, and then rolled three times in the same direction with a 2 kg pressure roller. A paper tape with the same width as the electrode plate and a length of 250 mm is fixed on an electrode plate current collector, and fixed with a masking tape. The power of the SANSI tensile machine (sensitivity of 1 N) is turned on, an indicator light is on, a limiting block is adjusted to an appropriate position, and an end of the steel plate that is not pasted with the electrode plate is fixed with a lower clamp. The paper tape is folded upward and fixed with an upper clamp, and a position of the upper clamp is adjusted using "up" and "down" buttons on a manual controller provided on the tensile machine. Then test is carried out and the numerical value is read, and a stretching velocity is 50 mm/min. The force on the electrode plate under balanced force is divided by the width of the adhesive tape, so as to obtain a numerical value which is used as the adhesion stress of the negative electrode plate per unit length to characterize an adhesion strength between the film layer on the current collector and the current collector.

### 6. Membrane resistance of electrode plate

The dried electrode plate is cut at the left, middle and right sides of the electrode plate into small discs with a diameter of 30 mm. The power of an electrode plate resistor meter from Initial Energy Science&Technology is turned on, the electrode plate is placed at an appropriate position of a "probe" of the electrode plate resistor meter, a "start" button is clicked, and after the display is stable, the data is read. Two positions of each small disc are tested, and finally an average value of six measurements is calculated, which is the film layer resistance of the electrode plate.

### 7. Thickness of priming coating

A glossy copper foil is taken and placed on a flat tabletop, the copper foil should extend about 5 cm beyond the tabletop, and the copper foil on the tabletop should be pressed down to prevent it from moving;
a micrometer is opened and reset to zero, wherein the micrometer is purchased from Mitutoyo Co., Ltd. of Japan;
testing is performed at different positions of the copper foil in turn, and an average value of five points is taken and recorded as L1;
after the copper foil is subjected to gravure coating on one side and dried, the cooper foil is placed on the flat tabletop, the copper foil should extend about 5 cm beyond the tabletop, and the copper foil on the tabletop should be pressed down to prevent it from moving;
the micrometer is opened and reset to zero;
testing is performed at different positions of the copper foil in turn, and an average value of five points is taken and recorded as L2;
the thickness of the priming coating = (L2-L1).

### III. Result analysis

**Table 1 Preparation parameters and results of examples and comparative examples**

| No. | Fluoropolymer | Monomer represented by Formula I | | Monomer represented by Formula II | | Weight average molecular weight (10,000) |
|---|---|---|---|---|---|---|
| | | Name | Molar content | Name | Molar content | |
| Example 1 | Vinylidene fluoride-butyl acrylate copolymer | Vinylidene fluoride | 75% | Butyl acrylate | 25% | 45 |
| Example 2 | Vinylidene fluoride-butyl acrylate copolymer | Vinylidene fluoride | 70% | Butyl acrylate | 30% | 45 |
| Example 3 | Vinylidene fluoride-butyl acrylate copolymer | Vinylidene fluoride | 90% | Butyl acrylate | 10% | 45 |
| Example 4 | Vinylidene fluoride-butyl acrylate copolymer | Vinylidene fluoride | 75% | Butyl acrylate | 25% | 30 |
| Example 5 | Vinylidene fluoride-butyl acrylate copolymer | Vinylidene fluoride | 75% | Butyl acrylate | 25% | 40 |
| Example 6 | Vinylidene fluoride-butyl acrylate copolymer | Vinylidene fluoride | 75% | Butyl acrylate | 25% | 50 |
| Example 7 | Vinylidene fluoride-butyl acrylate copolymer | Vinylidene fluoride | 75% | Butyl acrylate | 25% | 60 |
| Example 8 | Vinylidene fluoride-butyl acrylate copolymer | Vinylidene fluoride | 75% | Butyl acrylate | 25% | 45 |
| Example 9 | Vinylidene fluoride-butyl acrylate copolymer | Vinylidene fluoride | 75% | Butyl acrylate | 25% | 45 |
| Example 10 | Vinylidene fluoride-butyl acrylate copolymer | Vinylidene fluoride | 75% | Butyl acrylate | 25% | 45 |
| Example 11 | Vinylidene fluoride-butyl acrylate copolymer | Vinylidene fluoride | 75% | Butyl acrylate | 25% | 45 |
| Example 12 | Vinylidene fluoride-butyl acrylate copolymer | Vinylidene fluoride | 75% | Butyl acrylate | 25% | 45 |
| Example 13 | Vinylidene fluoride-butyl acrylate copolymer | Vinylidene fluoride | 75% | Butyl acrylate | 25% | 45 |
| Example 14 | Vinylidene fluoride-butyl acrylate copolymer | Vinylidene fluoride | 75% | Butyl acrylate | 25% | 45 |
| Example 15 | Vinylidene fluoride-butyl acrylate copolymer | Vinylidene fluoride | 75% | Butyl acrylate | 25% | 45 |
| Example 16 | Vinylidene fluoride-isooctyl acrylate copolymer | Vinylidene fluoride | 75% | Isooctyl acrylate | 25% | 45 |
| Example 17 | Vinylidene fluoride-butyl acrylate copolymer coated by scraper | Vinylidene fluoride | 75% | Butyl acrylate | 25% | 45 |
| Example 18 | Vinylidene fluoride-butyl acrylate copolymer prepared by conventional methods | Vinylidene fluoride | 75% | Butyl acrylate | 25% | 45 |
| Comparative example 1 | Vinylidene fluoride polymer | Vinylidene fluoride | 100% | / | / | 45 |
| Comparative example 2 | Vinylidene fluoride polymer coated by scraper | Vinylidene fluoride | 100% | / | / | 45 |
| Comparative example 3 | Vinylidene fluoride-butyl acrylate copolymer | Vinylidene fluoride | 50% | Butyl acrylate | 50% | 45 |
| Comparative example 4 | Vinylidene fluoride-butyl acrylate copolymer | Vinylidene fluoride | 95% | Butyl acrylate | 5% | 45 |

**Table 2 Preparation parameters and results of examples and comparative examples**

| No. | Fluoropolymer | Mass fraction of binder | Solid content | Primer slurry | | | Coating | Electrode plate |
|---|---|---|---|---|---|---|---|---|
| | | | | Viscosity /mPa.s | Filterability | Difference of solid content after standing for 24 hours | Thickness /um | Adhesion force (N/m) |
| Example 1 | Vinylidene fluoride-butyl acrylate copolymer | 2.04% | 20.00% | 400 | Y | 0.20% | 2 | 8.5 |
| Example 2 | Vinylidene fluoride-butyl acrylate copolymer | 2.04% | 20.00% | 350 | Y | 0.23% | 2 | 8.0 |
| Example 3 | Vinylidene fluoride-butyl acrylate copolymer | 2.04% | 20.00% | 500 | Y | 0.21% | 2 | 9.7 |
| Example 4 | Vinylidene fluoride-butyl acrylate copolymer | 2.04% | 20.00% | 200 | Y | 0.25% | 2 | 7.7 |
| Example 5 | Vinylidene fluoride-butyl acrylate copolymer | 2.04% | 20.00% | 300 | Y | 0.20% | 2 | 8.0 |
| Example 6 | Vinylidene fluoride-butyl acrylate copolymer | 2.04% | 20.00% | 450 | Y | 0.21% | 2 | 9.3 |
| Example 7 | Vinylidene fluoride-butyl acrylate copolymer | 2.04% | 20.00% | 750 | Y | 0.18% | 2 | 11.2 |
| Example 8 | Vinylidene fluoride-butyl acrylate copolymer | 0.30% | 20.00% | 200 | Y | 0.15% | 2 | 7.1 |
| Example 9 | Vinylidene fluoride-butyl acrylate copolymer | 0.50% | 20.00% | 250 | Y | 0.17% | 2 | 7.7 |
| Example 10 | Vinylidene fluoride-butyl acrylate copolymer | 5.00% | 20.00% | 700 | Y | 0.25% | 2 | 11.0 |
| Example 11 | Vinylidene fluoride-butyl acrylate copolymer | 6.00% | 20.00% | 750 | Y | 0.28% | 2 | 11.5 |
| Example 12 | Vinylidene fluoride-butyl acrylate copolymer | 2.04% | 10.00% | 200 | Y | 0.18% | 2 | 7.4 |
| Example 13 | Vinylidene fluoride-butyl acrylate copolymer | 2.04% | 15.00% | 350 | Y | 0.15% | 2 | 8.0 |
| Example 14 | Vinylidene fluoride-butyl acrylate copolymer | 2.04% | 30.00% | 500 | Y | 0.19% | 2 | 9.7 |
| Example 15 | Vinylidene fluoride-butyl acrylate copolymer | 2.04% | 35.00% | 750 | Y | 0.20% | 2 | 11.2 |
| Example 16 | Vinylidene fluoride-isooctyl acrylate copolymer | 2.04% | 20.00% | 350 | Y | 0.18% | 2.0 | 8.0 |
| Example 17 | Vinylidene fluoride-butyl acrylate copolymer coated by scraper | 2.04% | 20.00% | 400 | Y | 0.20% | 2 | 6 |
| Example 18 | Vinylidene fluoride-butyl acrylate copolymer prepared by conventional methods | 2.04% | 20.00% | 170 | Y | 5.00% | 2 | 4.2 |
| Comparative example 1 | Vinylidene fluoride polymer | 2.04% | 20.00% | 1100 | N | 0.18% | 2 | 12.5 |
| Comparative example 2 | Vinylidene fluoride polymer coated by scraper | 2.04% | 20.00% | 1100 | N | 0.16% | 2 | 9.0 |
| Comparative example 3 | Vinylidene fluoride-butyl acrylate copolymer | 2.04% | 20.00% | 200 | Y | 0.15% | 2 | 7.5 |
| Comparative example 4 | Vinylidene fluoride-butyl acrylate copolymer | 2.04% | 20.00% | 750 | Y | 0.22% | 2 | 11.4 |

According to the results in Table 1, it can be seen that the binders in Examples 1-18 are all fluoropolymer, including the structural unit derived from vinylidene fluoride and the structural unit derived from acrylate, and the molar content of the structural unit derived from vinylidene fluoride in the polymer is in a range from 70% to 90% on the basis of the total mole number of the structural units in the fluoropolymer. Good results are achieved using the above fluoropolymer as the binder. Compared with the polyvinylidene fluoride in Comparative Example 1, the fluoropolymer provided in the present application reduces the viscosity of the slurry and improves the filterability, and is suitable for preparing the priming coating.

From the comparison between Examples 1-3 and Comparative Examples 3 and 4, it can be seen that on the basis of the total molar content of all the structural units in the fluoropolymer, when the molar content of the structural unit derived from acrylate in the fluoropolymer is in a range from 10% to 30%, the viscosity of the fluoropolymer is appropriate, which can comprehensively improve the manufacturability and adhesion of the slurry, and take into account the processing performance and use performance of the priming coating.

From the comparison between Examples 4-7, it can be seen that when the weight average molecular weight of the fluoropolymer is in a range from 400,000 to 500,000, the viscosity of the fluoropolymer is appropriate, which can comprehensively improve the manufacturability and adhesion of the slurry, and take into account the processing performance and use performance of the priming coating.

It can be seen from Examples 8-11 that when the mass fraction of the fluoropolymer is in a range from 0.5% to 5% on the basis of the mass of the conductive agent, the viscosity of the fluoropolymer is appropriate, and the fluoropolymer is suitable for preparing the uniform priming coating, which can comprehensively improve the manufacturability and adhesion of the slurry, and take into account the processing performance and use performance of the priming coating.

It can be seen from Examples 12-15 that the mass fraction of the fluoropolymer is in a range from 0.5% to 5%, and the viscosity of the primer slurry with the solid content of 15% to 30% is in a range from 100 mPa·s to 1,000 mPa·s, which means that the primer slurry prepared from the fluoropolymer does not need to add an additional dispersant or thickener to improve processing performance, which helps to reduce the differences between batches of slurry, improve the production efficiency and optimize the production process.

From the comparison between Examples 1-16 and Example 18, it can be seen that the fluoropolymer prepared by the method disclosed in the present application can more effectively improve the stability of the slurry, expand the process window of slurry coating, and improve the processing performance of the slurry compared to the fluoropolymer synthesized by the traditional method.

From the comparison between Examples 1-16 and Example 17, it can be seen that the priming coating prepared by gravure coating has higher adhesion stress compared to the priming coating prepared by a scraper method commonly used in the prior art.

From the comparison between Examples 1-16 and Comparative Example 2, it can be seen that the priming coating prepared by gravure coating in the present application has comparable electrode plate adhesion stress to the priming coating prepared by the slurry containing the traditional binder but not by gravure coating in the prior art, and shows excellent application prospects.

It should be noted that the present application is not limited to the above embodiments. The above-described embodiments are merely illustrative, and embodiments having substantively the same composition as the technical idea and exerting the same effects within the scope of the technical solutions of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A fluoropolymer, comprising a structural unit derived from a monomer represented by formula I, and a structural unit derived from a monomer represented by formula II, wherein a molar content of the structural unit derived from the monomer represented by the formula I is in a range from 70% to 90% on the basis of the total mole number of the fluoropolymer, 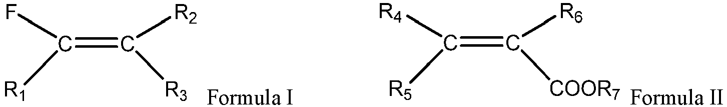 wherein R₁, R₂, and R₃ are each independently selected from hydrogen, fluorine, chlorine and fluorine substituted C₁₋₃ alkyl, R₄, R₅, and R₆ are each independently selected from hydrogen, or substituted or unsubstituted C₁₋₅ alkyl, and R₇ is selected from substituted or unsubstituted C₁₋₉ alkyl.

2. The fluoropolymer according to claim 1, wherein R₁ is fluorine, R₂ and R₃ are each independently selected from one or more of hydrogen, fluorine, chlorine and trifluoromethyl, and R₅ and R₆ are each independently selected from one or both of hydrogen and methyl.

3. The fluoropolymer according to claim 1 or 2, wherein a molar content of the structural unit derived from the monomer represented by the formula II is in a range from 10% to 30% on the basis of the total mole number of the structural units in the fluoropolymer.

4. The fluoropolymer according to any one of claims 1-3, wherein the fluoropolymer has a weight average molecular weight ranging from 400,000 to 500,000.

5. The fluoropolymer according to claim 1, wherein the monomer represented by the formula I is selected from one or more of vinyl fluoride, vinylidene fluoride, tetrafluoroethylene, trifluoro chloroethylene, and hexafluoropropylene.

6. The fluoropolymer according to any one of claims 1-5, wherein the monomer represented by the formula II is selected from one or more of methyl acrylate, ethyl acrylate, butyl acrylate, isoamyl acrylate, isooctyl acrylate, methyl methacrylate, ethyl methacrylate, hydroxyethyl acrylate, and hydroxypropyl acrylate.

7. A preparation method for a fluoropolymer, comprising the following steps:
performing a polymerization reaction of at least one monomer represented by formula I with at least one monomer represented by formula II under a polymerizable condition, wherein a molar content of the monomer represented by the formula I is in a range from 70% to 90% on the basis of the total mole number of the monomer represented by the formula I and the monomer represented by the formula II, 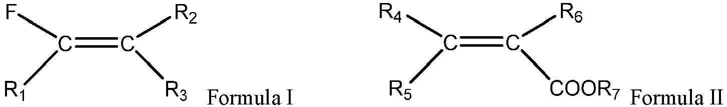
wherein, R₁, R₂, and R₃ are each independently selected from hydrogen, fluorine, chlorine and fluorine substituted C₁₋₃ alkyl, R₄, R₅, and R₆ are each independently selected from hydrogen, and substituted or unsubstituted C₁₋₅ alkyl, and R₇ is selected from substituted or unsubstituted C₁₋₉ alkyl.

8. The preparation method according to claim 7, wherein R₁ is fluorine, R₂ and R₃ are each independently selected from one or more of hydrogen, fluorine, chlorine and trifluoromethyl, and R₅ and R₆ are each independently selected from one or both of hydrogen and methyl.

9. The preparation method according to claim 7 or 8, wherein a molar content of the monomer represented by the formula II is in a range from 10% to 30% on the basis of the total mole number of the monomer represented by the formula I and the monomer represented by the formula II.

10. The preparation method according to any one of claims 7-9, wherein the polymerization reaction comprises first-stage polymerization and second-stage polymerization,
in the first-stage polymerization: an initiator, a first emulsifier, at least one monomer represented by the formula I and an aqueous medium are added into a reaction container to carry out the first-stage polymerization, and the monomer represented by the formula I is continuously fed into the first stage-polymerization; and
in the second-stage polymerization: an initiator, a second emulsifier, at least one monomer represented by the formula II and an aqueous medium are added into a reaction container after a period of reaction to carry out the second-stage polymerization, and the monomer represented by the formula I is continuously fed into the second-stage polymerization.

11. The preparation method according to claim 10, wherein mass of the monomer represented by the formula I introduced in the first-stage polymerization is 90% to 95% of total mass of the monomer represented by the formula I supplied in the polymerization reaction, and mass of the monomer represented by the formula I introduced in the second-stage polymerization is 5% to 10% of the total mass of the monomer represented by the formula I supplied in the polymerization reaction.

12. The preparation method according to claim 10 or 11, wherein the initiator provided in the first-stage polymerization and the initiator provided in the second-stage polymerization are both persulfate, and a mass percentage of the initiator provided in the first-stage polymerization is in a range from 0.05% to 0.1% on the basis of total mass of the monomer represented by the formula I and the monomer represented by the formula II; and a mass percentage of the initiator provided in the second-stage polymerization is in a range from 0.05% to 0.1% on the basis of the mass of the monomer represented by the formula II.

13. The preparation method according to any one of claims 10-12, wherein a mass percentage of the first emulsifier is in a range from 0.2% to 0.7% on the basis of the total mass of the monomer represented by the formula I and the monomer represented by the formula II.

14. The preparation method according to any one of claims 10-13, wherein a mass percentage of the second emulsifier is in a range from 0.5% to 1.5% on the basis of the mass of the monomer represented by the formula II.

15. The preparation method according to any one of claims 10-14, wherein a mass percentage of the aqueous medium provided in the first-stage polymerization is in a range from 200% to 500%, and a mass percentage of the aqueous medium provided in the second-stage polymerization is in a range from 100% to 200% on the basis of the total mass of the monomer represented by the formula I and the monomer represented by the formula II.

16. The preparation method according to any one of claims 10-15, wherein for the first-stage polymerization, a reaction pressure is in a range from 5.5 MPa to 7.5 MPa, and a reaction temperature is in a range from 75°C to 85°C.

17. The preparation method according to any one of claims 10-16, wherein for the second-stage polymerization, a reaction pressure is in a range from 4.5 MPa to 6.5 MPa, and a reaction temperature is in a range from 86°C to 95°C.

18. The preparation method according to any one of claims 10-17, wherein providing the initiator, the second emulsifier, at least one monomer represented by the formula II and the aqueous medium into the reaction container after a period of reaction to carry out the second-stage polymerization comprises:
adding, after adding the initiator into the reaction container, a premixed liquid containing the initiator, the second emulsifier, at least one monomer represented by the formula II and the aqueous medium.

19. The preparation method according to any one of claims 10 to 18, wherein the first emulsifier is an alkali metal salt of perfluorooctanoic acid.

20. The preparation method according to any one of claims 10 to 19, wherein the second emulsifier is one or both of polyoxyethylene-4-phenol ether ammonium sulfate and nonylphenol polyoxyethylene ether ammonium sulfate.

21. Use of the fluoropolymer according to any one of claims 1-6 in a secondary battery.

22. A primer slurry, comprising a binder, a conductive agent and a solvent, wherein the binder comprises the fluoropolymer according to any one of claims 1-6.

23. The primer slurry according to claim 22, wherein a mass fraction of the binder is in a range from 0.5% to 5% on the basis of mass of the conductive agent.

24. The primer slurry according to claim 22 or 23, wherein a solid content of the primer slurry is in a range from 15% to 30%, and viscosity of the primer slurry is in a range from 100 mPa·s to 1,000 mPa·s.

25. The primer slurry according to any one of claims 22-24, wherein the solvent is an organic solvent.

26. The primer slurry according to any one of claims 22-25, wherein the solvent is selected from one or more of N-methylpyrrolidone, N,N-dimethylpropionamide, N,N-diethylpropionamide, N,N-dipropylpropionamide, N,N-dibutylpropionamide, N,N-dimethylethylpropionamide, and 3-butoxy-N-methylpropionamide.

27. A preparation method for a priming coating, comprising the following steps:
applying a primer slurry according to any one of claims 22-26 on a surface of a current collector by means of gravure coating; and drying the primer slurry to obtain the priming coating.

28. A secondary battery, comprising a positive electrode plate, a negative electrode plate, a separator and an electrolyte solution, wherein the negative electrode plate comprises the priming coating prepared by the preparation method according to claim 27.

29. The secondary battery according to claim 28, wherein the secondary battery comprises at least one of a lithium-ion battery, a sodium-ion battery, a magnesium-ion battery, and a potassium-ion battery.

30. A battery module, comprising the secondary battery according to claim 28 or 29.

31. A battery pack, comprising at least one of the secondary battery according to claim 28 or 29, and the battery module according to claim 30.

32. An electrical apparatus, comprising at least one of the secondary battery according to claim 28 or 29, the battery module according to claim 30 or the battery pack according to claim 31.
